# EUROPEAN PATENT APPLICATION

(11) **EP 4 710 892 A1**
(43) Date of publication of application: **18.03.2026**
(21) Application number: 25425041.8
(22) Date of filing: 04.09.2025
(51) Int. Cl.: A61C 1/08, A61C 1/12, A61C 9/00, A61C 13/00

(54) **SYSTEM FOR DIAGNOSIS, PLANNING AND GUIDED EXECUTION OF DENTAL PREPARATIONS IN FIXED PROSTHESES**

(30) Priority: 12.09.2024 IT 202400020296
(71) Applicant: Arcuri, Lorenzo, 00142 Rome (IT); Pozzi, Alessandro, 00198 Rome (IT)
(72) Inventor: Arcuri, Lorenzo, 00142 Rome (IT); Pozzi, Alessandro, 00198 Rome (IT)

(57) **Abstract**

System for diagnosis, planning and guided execution of dental preparations in fixed prostheses, comprising a computer system, with respective hardware and software components, as well as further dedicated peripherals, which implements a process characterized by the following steps:
A) *preliminary diagnosis of the elements to be submitted to a prosthetic process:*
A.1) evaluate the dental element(s) and related prosthetic process,
A.2) evaluate the bone support, including ratio of intraosseous and extraosseous dental portion, and distance and divergence between teeth to be connected, and
A.3) evaluate the internal structure, e.g. enamel, dentin, pulp, cement, material for reconstruction;

B) *planning of ideal dental preparation(s):*
B.1) superimpose an ideal prosthetic project to an initial anatomical dental situation;
B.2) define a final subgingival/juxtagingival/supragingival preparation; and
B.3) starting from an ideal tooth volume, reduce the volume so as to simulate the ideal dental preparation, taking into due consideration:
B.3.1) the extent of the reduction depending on the material that will be used to construct the crown, e.g. metal-ceramic, zirconia, zirconia-ceramic, composite, disilicate lithium, ceramic,
B.3.2) insertion axis of the prosthesis, where multiple dental elements should be parallelized in order to have a common insertion axis, and
B.3.3) inclination of the prosthesis walls, which could be more or less retentive from a mechanical point of view;

C) *diagnosis of the ideal dental preparation(s) generated:*
C.1) evaluate the proximity to the pulp in the dental vital elements, including the need of root canal therapy related to vital dental elements,
C.2) evaluate the structural surface composition of an ideal abutment, including percentage of enamel/dentin/reconstruction material, in order to assess retention adhesive of the substrate,
C.3) evaluate, starting from the final preparation, the quantity of healthy dental tissue in terms of height - splint/cerclage effect, in order to define the mechanical stability of the preparation;

D) *transfer the ideal dental preparation into the oral cavity of a real patient* according to two possible options:
a) develop a tooth-supported transfer mask with guide tracks for dedicated drills with axial and depth stops, but capable of sliding along these tracks;
b) develop real-time control means using stereophotogrammetry; said control will allow the operator to use a drill in order to file the tooth freehand within a volume of free movement.

## Description

The present invention is related to the field of dentistry, with particular reference to techniques for preparing and installing dental prostheses.

It essentially concerns a system for diagnosing, planning, and guiding the execution of dental preparations in fixed prosthetics, such as preparations for crowns, bridges, inlays, and veneers. More specifically, the invention comprises a computer system, with respective hardware and software components, as well as additional peripherals dedicated to this specific function of guiding the execution of dental preparations.

As known, in the current state of the art computer systems are already used to extrapolate a three-dimensional model of the oral cavity from a specific patient, thus creating a virtual patient for diagnostic and planning purposes.

This allows, using objective data from the virtual patient, to simulate and analyze the most suitable dental preparation design based on the final prosthetic volume, the material used, and the structure of the tooth.

For example, documents US 2023/0031165 A1, US 11612462 B2, US 2019/0209274 A1, and US 2021/0369421 A1 describe computer systems that implement diagnostic and planning procedures for dental preparations.

The anatomical structures are acquired within these systems using DICOM (Digital Imaging and Communication in Medicine) data from CBCT (Cone Beam Computed Tomography) technology.

Additional data is acquired in STL (Standard Tessellation Language) format from standard intraoral scanning devices, so that the model contains both anatomical and surface structural information.

Current computer-guided implant surgery systems already use the integration of the above said CBCT + STL data to identify a simulated ideal preparation, so that it can then be transferred into a real patient's oral cavity, in particular using a physical template and dedicated drills.

Among the current solutions, there is also software for planning implant positions, with relative transfer of the position into the patient's oral cavity using guide masks and dedicated drills (static guided surgery) or using a stereocamera system with real-time coupling of the real and virtual patient (with planning) (dynamic guided surgery/implant navigation).

However, empirical tooth preparation presents some drawbacks, including:
- excessive tooth substance removal (invasiveness and, sometimes, the need for root canal treatment);
- or insufficient tooth substance removal (difficulty fitting temporary dental prosthesis, limited space for permanent dental prosthesis, fixed dental prosthesis that are too thin in some areas, resulting in fragility);
- irregular tooth preparations due to undercuts (difficulty fitting fixed dental prosthesis and weak points, as these gaps will be filled by cement);
- in the case of multiple abutments to be joined, lack of parallelism, making it difficult or impossible to fit bridges;
- long operating times for preparing teeth and fitting temporary dental prosthesis.

The present invention overcomes all of the above said drawbacks through:
- a study with objective parameters of the future prosthetic dental abutments and the related automated planning of ideal dental preparations, according to previously entered objective parameters (tooth structure, mechanical strength of the abutments, adhesive capacity of the abutment structure, material chosen for the prosthesis, number of abutments, convergence of the axial walls of the preparation);
- an ideal preparation that will be transferred using two possible guide systems: a first system based on a physical guide with dedicated drills that statically reproduce the tooth preparation; a second system that includes optical control via stereophotogrammetry that, by matching a real patient with a virtual patient (with dental preparation planning), allows the operator to file the tooth freehand, with drill speed controls and respective acoustic and vibratory feedback when the planned cutting volume is approaching.

Therefore, the present invention differs from known solutions in that transferring implant positions is relatively simplified, as it involves drilling holes with a specific diameter and to a specific depth. Consequently, the static system comprises templates with bushings and a drill system with locking elements (stops). The dynamic system allows the operator to drill holes freehand, looking at a screen where the drill is displayed, which should be superimposed on the plan (real-time guidance of the depth and inclination of the drill). Dentistry preparation involves more than just drilling holes; multiple degrees of freedom are required in working with the drill; therefore, the above said systems would not be applicable with other methods and/or devices.

Therefore, the main objective of the present invention is to propose a system for the diagnosis, planning, and guided execution of dental preparations for fixed prosthetics, in which the diagnosis and planning of dental prosthetics are based on specific parameters.

Another objective is to visualize an ideal prosthetic preparation based on entered parameters.

Another objective is to transfer this preparation into the patient's mouth using one of the two above said systems (physical guidance with dedicated drills or an optical control system).

An additional objective is to be able to use stereocamera-mediated cutting control (without the constraints and bulk of dedicated templates and drills) for other dental and/or other procedures.

Therefore, it is specific subject of the present invention a system for diagnosis, planning and guided execution of dental preparations in fixed prostheses, comprising a computer system, with respective hardware and software components, as well as further dedicated peripherals, which implements a process characterized by the following steps:
A) *preliminary diagnosis of the elements to be submitted to a prosthetic process:*
   A.1) evaluate the dental element(s) and related prosthetic process,
   A.2) evaluate the bone support, including ratio of intraosseous and extraosseous dental portion, and distance and divergence between teeth to be connected, and
   A.3) evaluate the internal structure, e.g. enamel, dentin, pulp, cement, material for reconstruction;
B) *planning of ideal dental preparation(s):*
   B.1) superimpose an ideal prosthetic project to an initial anatomical dental situation;
   B.2) define a final subgingival/juxtagingival/supragingival preparation; and
   B.3) starting from an ideal tooth volume, reduce the volume so as to simulate the ideal dental preparation, taking into due consideration:
   B.3.1) the extent of the reduction depending on the material that will be used to construct the crown, e.g. metal-ceramic, zirconia, zirconia-ceramic, composite, disilicate lithium, ceramic,
   B.3.2) insertion axis of the prosthesis, where multiple dental elements should be parallelized in order to have a common insertion axis, and
   B.3.3) inclination of the prosthesis walls, which could be more or less retentive from a mechanical point of view;
C) *diagnosis of the ideal dental preparation(s) generated*:
   C.1) evaluate the proximity to the pulp in the dental vital elements, including the need of root canal therapy related to vital dental elements,
   C.2) evaluate the structural surface composition of an ideal abutment, including percentage of enamel/dentin/reconstruction material, in order to assess retention adhesive of the substrate,
   C.3) evaluate, starting from the final preparation, the quantity of healthy dental tissue in terms of height - splint/cerclage effect, in order to define the mechanical stability of the preparation;
D) *transfer the ideal dental preparation into the oral cavity of a real patient* according to two possible options:
   a) develop a tooth-supported transfer mask with guide tracks for dedicated drills with axial and depth stops, but capable of sliding along these tracks;
   b) develop real-time control means using stereophotogrammetry; said control will allow the operator to use a drill in order to file the tooth freehand within a volume of free movement.

As the operator approaches the boundary of this volume of freedom (proximity to the walls of the planned tooth preparation or adjacent teeth not to be treated), the handpiece will begin to reduce the rotation speed of the drill, eventually stopping. At the same time, acoustic and sensory feedback (vibration of the handpiece) may also be provided to guide the operator.

The present invention therefore has the following advantages:
- the study of prosthetic planning with objective parameters;
- the use of the software also for research purposes (study of materials, preparation designs, etc.);
- the use of stereocamera-mediated cutting control in any other dental procedure or other procedures that require it (for example, orthopedics, etc.).

The present invention is now being described according to non-limiting examples, with particular reference to the figures of the enclosed drawings, where:
Figures 1a and 1b are a side and front view of the recorded volume of a posterior tooth;
Figures 2a and 2b are a side and front view of the same tooth, with the volume of the ideal tooth superimposed;
Figures 3a and 3b are a side and front view of the same tooth, with the volume of the respective tooth preparation superimposed;
Figures 4a and 4b are a front and side view of the recorded volume of an anterior tooth;
Figures 5a and 5b are a front and side view of the same tooth, with the volume of the ideal tooth superimposed;
Figures 6a and 6b are a front and side view of the same tooth, with the volume of the respective tooth preparation superimposed;
Figure 7 is a front view of the volume of two teeth with the space of a missing tooth between them;
Figure 8 is a front view of the same teeth and the space in which the volumes of their respective ideal teeth are superimposed;
Figure 9 is a front view of the same teeth and the space in which the volumes of their respective tooth preparations for a bridge are further superimposed;
Figure 10 is two front views of the same tooth in the initial and final phases of the volume reduction procedure to obtain a tooth preparation;
Figure 11 is a front view of the same tooth as Figure 10, highlighting how the tooth preparation allows for the creation of a thickness that allows for the insertion of restorative material;
Figure 12 is a front view of the same tooth as Figure 10, highlighting how the tooth preparation allows for a full occlusal convergence angle for the insertion of restorative material;
Figure 13 is a front view of a tooth whose geometric shape was detected using image processing technologies;
Figure 14 is a front view of the same tooth as Figure 13, identifying the relationship between the crown and root to the support of a potential abutment;
Figure 15 is a front view of a pair of teeth, identifying the distance between their abutments for the installation of a bridge;
Figure 16 is a front view of a pair of teeth, identifying the divergence between the axes of their abutments for the installation of a bridge;
Figure 17 is a front view of a tooth, identifying the finish line;
Figure 18 is a front view of the crown of the same tooth as Figure 17, with the lower portion cut away;
Figures 19a and 19b are a front and side view of a tooth, respectively, highlighting the internal components of enamel, cementum, dentin, and pulp;
Figures 20a and 20b are a front and side view of a tooth, respectively, highlighting the internal components of enamel, cementum, dentin, pulp, and restorative material;
Figure 21 is a front view of a tooth in the initial and final phases of volume reduction, axis and wall inclination, to achieve a tooth preparation;
Figure 22 is a front view of the same tooth as Figure 21, highlighting the internal components and assessing the possible need for endodontic treatment;
Figures 23a and 23b are front views of treated teeth, respectively, evaluating adhesive retention (selecting the appropriate cementation procedure);
Figures 24a, 24b, and 24c are front views of treated teeth, respectively, evaluating their mechanical stability;
Figures 25a and 25b are front views of two treated teeth, where their parallelism is assessed to determine favorable axes for the insertion of multiple abutments;
Figure 26a is a front view of a tooth with a template applied, which in turn serves as a guide for volume reduction and axes and wall inclination, to achieve a tooth preparation;
Figure 26b is a front view of the same tooth as in Figure 26a, with the template applied, during the application of a drill tip for the above said volume reduction operation, axis and wall inclination, in order to obtain the tooth preparation;
Figure 27 is a front view of a real-time stereophotogrammetry control system, during the application of a drill tip for the above said volume reduction operation, axis and wall inclination, in order to obtain the tooth preparation;
Figure 28 is a detail view of the display screen of the above said real-time photogrammetry control system in Figure 27;
Figure 29 is a front view of a tooth during the application of a drill tip using the guidance of a real-time stereophotogrammetry control system;
Figure 30 is a front view of a tooth like that in Figure 29, in the phase of applying the drill tip, using the guidance of a real-time control system by stereophotogrammetry, and in the situation where adjacent teeth are not to be treated.

It is underlined that only few of the many conceivable embodiments of the present invention are here described, which are just some specific non-limiting examples, having the possibility to describe many other embodiments based on the disclosed technical solutions of the present invention. The same elements will be indicated by the same reference numbers in the various figures.

The present invention therefore consists of a system for the diagnosis, planning, and guided execution of dental preparations for fixed prosthetics, consisting of a computer system with respective hardware and software components, as well as additional dedicated peripherals. The computer system implements a process for preparing and installing dental prostheses.

The first step of the process is a *preliminary diagnosis of the elements to be submitted to a prosthetic process*: that is, evaluating the tooth(s) to be restored (bone support - ratio between intraosseous and extraosseous tooth portion), distance and divergence between teeth to be fixed, and internal structure (enamel, dentin, pulp, cementum, restorative material).

In order to perform the above said *preliminary diagnosis of the elements to be submitted to a prosthetic process*, a three-dimensional model of the oral cavity must be extrapolated from a specific patient, thus obtaining a virtual patient for further diagnostic and planning purposes.

The anatomical structures are acquired within the above said computer system using data communication media in DICOM (Digital Imaging and Communication in Medicine) format from CBCT (Cone Beam Computed Tomography) scanners.

Through these communication media, additional data is acquired in STL (Standard Tessellation Language) format from standard intraoral scanning devices, so that the model contains both anatomical and surface structural information.

This allows to simulate and analyze the most suitable dental preparation design based on the final prosthetic volume, the material used, and the tooth structure using objective values on the virtual patient.

The second step in the process involves *planning the ideal dental preparation(s)*: that is, superimposing an ideal prosthetic design onto the initial dental anatomical situation; defining a final preparation (subgingival/juxtagingival/supragingival); starting from the ideal tooth volume, reduce the volume to simulate the ideal tooth preparation, taking into account the extent of the reduction based on the material used to construct the crown (metal-ceramic, zirconia, zirconia-ceramic, composite, lithium disilicate, ceramic); the prosthesis insertion axis (multiple teeth to be paralleled to achieve a common insertion axis); and the inclination of the prosthesis walls (more or less mechanically retentive).

Here following, some examples of ideal dental preparation planning will be presented.

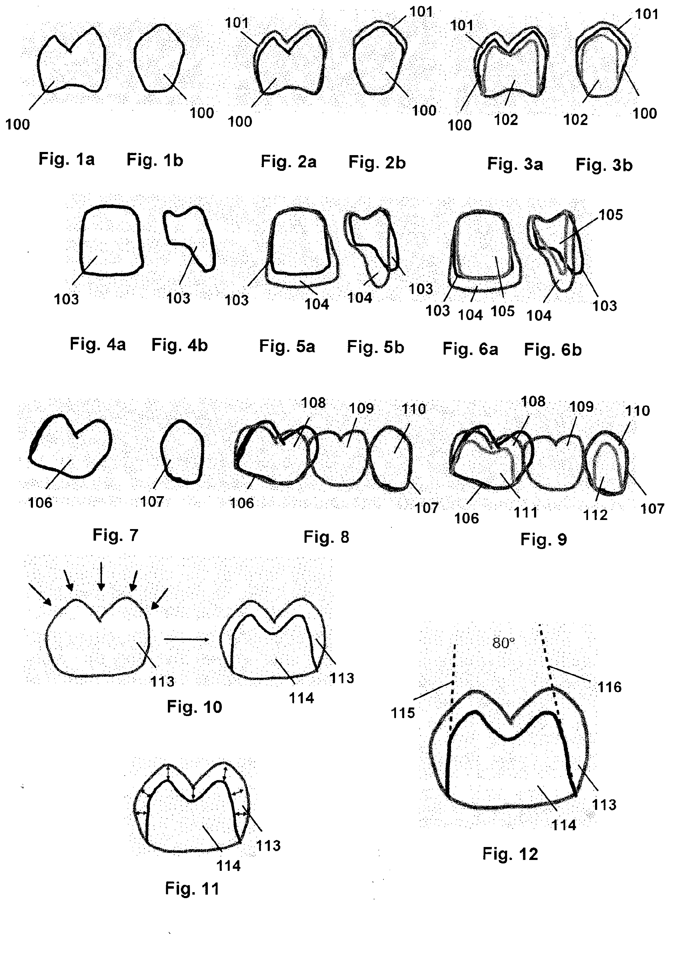

Figures 1a and 1b are a respective side and front view of the detected volume of a posterior tooth 100. Figures 2a and 2b are a respective side and front view of the same posterior tooth 100 in which the volume of the ideal tooth 101 is superimposed. Figures 3a and 3b are a respective side and front view of the same tooth 100 in which the volume of the respective dental preparation 102 is further superimposed. Figures 4a and 4b are a respective front and side view of the detected volume of an anterior tooth 103. Figures 5a and 5b are a respective front and side view of the same anterior tooth 103 in which the volume of the ideal tooth 104 is superimposed. Figures 6a and 6b are a respective front and side view of the same tooth 103 in which the volume of the respective dental preparation 105 is further superimposed.

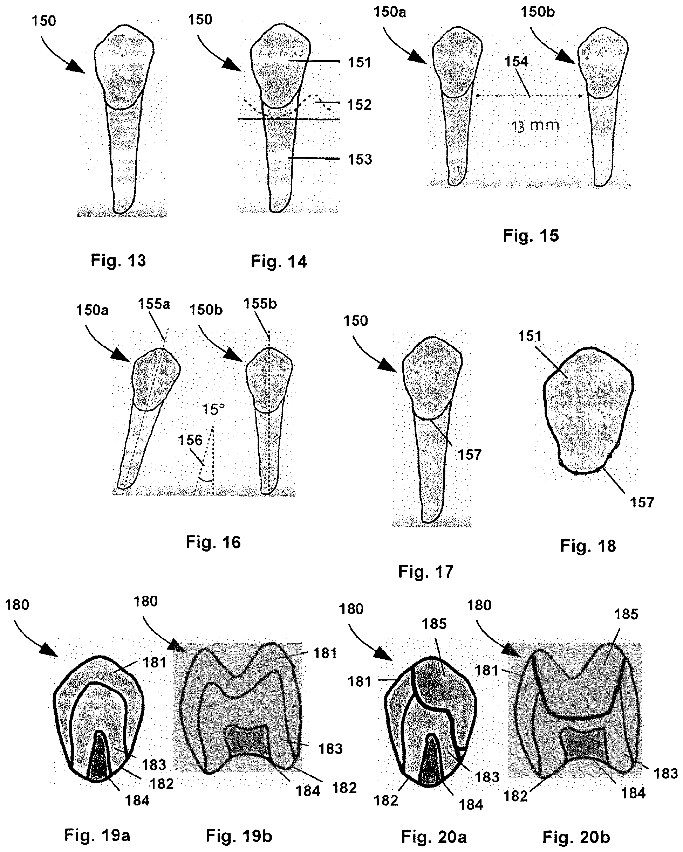

Figure 7 is a front view of the detected volume of two teeth 106, 107 with a gap of one missing tooth between them. Figure 8 is a front view of the same teeth 106, 107 and the corresponding gap, in which the volumes of the respective ideal teeth 108, 109, 110 are superimposed. Figure 9 is a front view of the same teeth 106, 107 and the gap, in which the volumes of the respective dental preparation 111, 112 for a bridge are further superimposed. Figure 10 is two front views of the same tooth 113 in the initial and final phases of the volume reduction operation to obtain a dental preparation 114. Figure 11 is a front view of the same tooth as in Figure 10, in which it is highlighted how the dental preparation 114 allows for obtaining a thickness 113 to be able to insert restorative material. Figure 12 is a front view of the same tooth as in Figure 10, which highlights how tooth preparation 114 allows for a full occlusal convergence angle between axes 115 and 116 to be achieved, allowing for the insertion of restorative material. Figure 13 is a front view of tooth 150, whose geometric shape was detected using image processing technologies. Figure 14 is a front view of the same tooth 150 as in Figure 13, in which the relationship between crown 151 and root 153 has been identified to support a potential abutment. Figure 15 is a front view of a pair of teeth 150a and 150b, in which the distance 154 between their respective abutments has been identified for the installation of a bridge. Figure 16 is a front view of a pair of teeth 150a, 150b, in which the divergence 156 between two axes 155a, 155b of respective abutments for the installation of a bridge has been identified. Figure 17 is a front view of a tooth 150 in which the finish line 157 has been identified.

The third step of the process involves *diagnosis of the ideal dental preparation(s) generated*: that is, assessing the proximity of vital teeth to the pulp; the need for root canal treatment of vital teeth; the structural composition of the ideal abutment surface; the percentage of enamel/dentin/restorative material to assess the adhesive retention of the substrate; and the amount of healthy tooth tissue in terms of height, starting from the end of the preparation; and the ferrule/cerclage effect, to define the mechanical stability of the preparation.

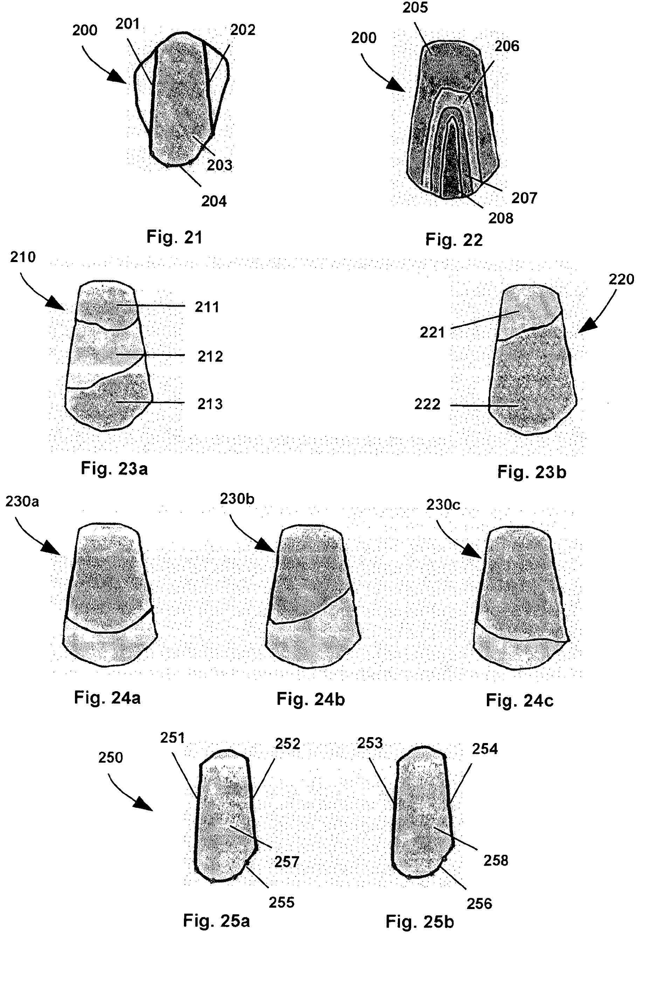

Figures 19a and 19b are a respective front and side view of a tooth 180, in which the internal components of enamel 181, cementum 182, dentin 183 and pulp 184 are highlighted. Figures 20a and 20b are a respective front and side view of a tooth 180, in which the internal components of enamel 181, cementum 182, dentin 183, pulp 184 and restorative material 185 are highlighted. Figure 21 is a front view of a tooth 200 in the initial and final phase of the volume reduction operation, of inclination of axes 201, 202 and wall 203, to obtain a tooth preparation 204.

Here following there are some examples of *diagnosis of the ideal dental preparation(s) generated.*

Figure 22 is a front view of the same tooth 200 as in Figure 21, highlighting the internal components and assessing the potential need for endodontic treatment.

Figures 23a and 23b are front views of respective treated teeth 210 and 220, assessing adhesive retention (selecting the appropriate cementation procedure), and indicating the composite portions 211, dentin 212 and 221, and enamel 213 and 222.

Figures 24a, 24b, and 24c are front views of respective treated teeth 230a, 230b, and 230c, assessing their mechanical stability. Figures 25a and 25b are front views of two respective treated teeth 257, 258 in which their parallelism is evaluated in order to define favorable axes 251, 252 and 253, 254 for the insertion of multiple abutments.

The fourth step of the process is *transfer the ideal dental preparation into the oral cavity of a real patient*, according to two possible options:
a) develop a tooth-supported transfer template with guide rails for dedicated drills with axial and depth stops, but capable of sliding along these rails;
b) develop real-time control methods using stereophotogrammetry; said control will allow the operator to use a drill in order to file the tooth freehand within a volume of free movement.

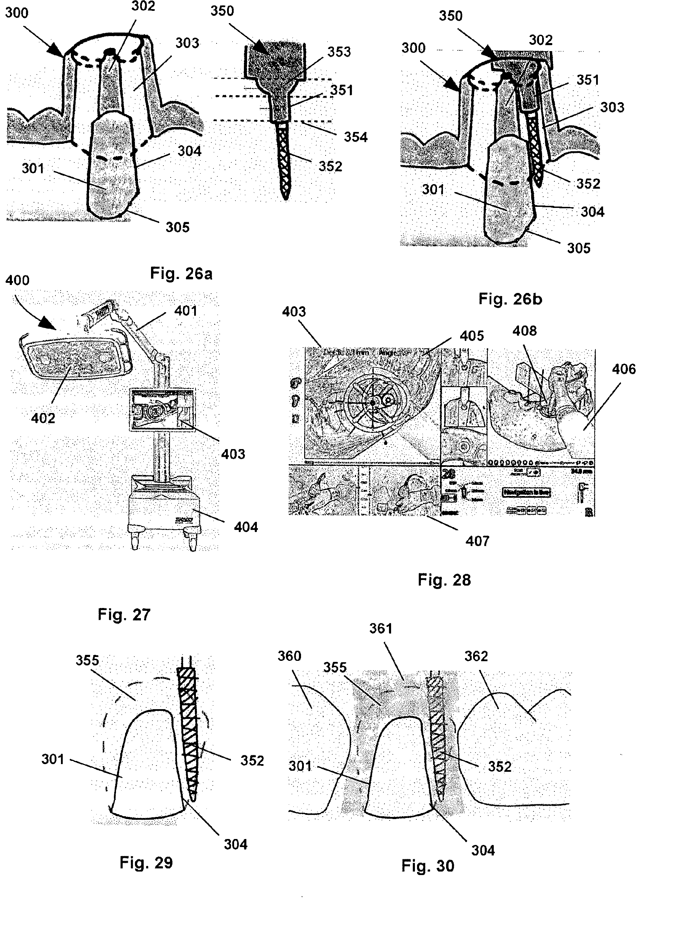

Figures 26a and 26b show the first of the above said options. Specifically, Figure 26a is a front view of a tooth 301 to which a template 300 has been applied, which in turn represents a guide for the volume reduction operation, axis and wall inclination, in order to obtain a tooth preparation. Figure 26b is a front view of the same tooth 301 of Figure 26a to which the template 300 has been applied, during the application of the tip 352 of a drill 350 for the above said volume reduction operation, axis and wall inclination, in order to obtain the tooth preparation.

Figures 27, 28, 29, and 30 show the second of the above said options. Figure 27 is a front view of a real-time stereophotogrammetry control system 400, during the application of a drill bit for the above said volume reduction, axis and wall tilting operation, in order to obtain the tooth preparation. Figure 28 is a detail view of the display screen 403 of the above said real-time stereophotogrammetry control system 400 of Figure 27. Figure 29 is a front view of a tooth 301 during the application of the tip 352 of a drill 350 using the guidance of the above said real-time stereophotogrammetry control system 400. Figure 30 is a front view of a tooth 301 like that of Figure 29, in the phase of applying the tip 352 of a drill 350, using the guidance of the above said control system 400 in real time by stereophotogrammetry, and in the situation in which the adjacent teeth 360, 362 are not to be treated.

In fact, as the operator approaches the boundary of the 355 volume of freedom (proximity to the walls of the planned dental preparation or to adjacent elements not to be treated), the handpiece will begin to reduce the rotation speed of the drill until it even stops; at the same time, there may also be acoustic and sensorial feedback (vibration of the handpiece) to guide the operator.

Therefore, the present invention achieves all of the intended objectives by disclosing a system for the diagnosis, planning, and guided execution of dental preparations in fixed prosthetics, in which the diagnosis and planning of dental prosthetics are based on objective parameters.

Specifically, the ideal prosthetic preparation is visualized based on the entered parameters.

According to the invention, the transfer of this preparation into the patient's mouth occurs using one of the two above said systems (physical guidance with dedicated drills, or an optical control system).

Furthermore, according to the invention, it is possible to use stereocamera-mediated cutting control (without the constraints and bulk of dedicated templates and drills) for other dental and/or other procedures as well.

The present invention has been described by making reference to some non limiting examples and following some preferred embodiments; however it is clear that modifications and/or changes can be introduced by those skilled in the art without departing from the relevant scope, as defined in the enclosed claims.

The application has been described in the field of dental prosthetics, but future developments could lead to the application of cutting control also in the surgical branch (odontotomy of teeth to be extracted or other surgical procedures that involve cutting bone/teeth while respecting the adjacent sensitive anatomical structures - nerves, blood vessels, paranasal sinuses, etc.).

## Claims

1. Process for diagnosis, planning and guided execution of dental preparations in fixed prostheses, **characterized by** the following steps:
A) *preliminary diagnosis of the elements to be submitted to a prosthetic process:*
A.1) evaluate the dental element(s) and related prosthetic process,
A.2) evaluate the bone support, including ratio of intraosseous and extraosseous dental portion, and distance and divergence between teeth to be connected, and
A.3) evaluate the internal structure, e.g. enamel, dentin, pulp, cement, material for reconstruction;
B) *planning of ideal dental preparation(s):*
B.1) superimpose an ideal prosthetic project to an initial anatomical dental situation;
B.2) define a final subgingival/juxtagingival/supragingival preparation; and
B.3) starting from an ideal tooth volume, reduce the volume so as to simulate the ideal dental preparation, taking into due consideration:
B.3.1) the extent of the reduction depending on the material that will be used to construct the crown, e.g. metal-ceramic, zirconia, zirconia-ceramic, composite, disilicate lithium, ceramic,
B.3.2) insertion axis of the prosthesis, where multiple dental elements should be parallelized in order to have a common insertion axis, and
B.3.3) inclination of the prosthesis walls, which could be more or less retentive from a mechanical point of view;
C) *diagnosis of the ideal dental preparation(s) generated:*
C.1) evaluate the proximity to the pulp in the dental vital elements, including the need of root canal therapy related to vital dental elements,
C.2) evaluate the structural surface composition of an ideal abutment, including percentage of enamel/dentin/reconstruction material, in order to assess retention adhesive of the substrate,
C.3) evaluate, starting from the final preparation, the quantity of healthy dental tissue in terms of height - splint/cerclage effect, in order to define the mechanical stability of the preparation;
D) *transfer the ideal dental preparation into the oral cavity of a real patient* according to two possible options:
a) develop a tooth-supported transfer mask with guide tracks for dedicated drills with axial and depth stops, but capable of sliding along these tracks;
b) develop real-time control means using stereophotogrammetry; said control will allow the operator to use a drill in order to file the tooth freehand within a volume of free movement.

2. Process for diagnosing, planning, and guiding the execution of dental preparations in fixed prosthetics, according to the previous claim, **characterized in that** the above said option of developing real-time control means using photogrammetry:
- as the operator approaches the boundary of the above said volume of freedom, that is proximity to the walls of the planned dental preparation or adjacent teeth not to be treated, the handpiece of the above said drill will begin to reduce its rotation speed, even stopping; at the same time, acoustic and sensory feedback, that is vibration of the handpiece itself, is provided to guide the operator.

3. Process for diagnosing, planning, and guiding the execution of dental preparations in fixed prosthetics, according to one or more of previous claims, **characterized in that**:
- in order to perform the above said *preliminary diagnosis of the elements to be submitted to a prosthetic process,* a three-dimensional model of the anatomical parts of the oral cavity is extrapolated from a specific patient, thus obtaining a virtual patient with respect to which further diagnostic and planning actions can be performed.

4. Process for diagnosing, planning, and guiding the execution of dental preparations in fixed prosthetics, according to one or more of previous claims, **characterized in that**:
- in the above said *planning of ideal dental preparation(s),* the volume of a posterior tooth (100) is detected, then the volume of an ideal tooth (101) is superimposed, and finally the volume of a respective dental preparation (102) is further superimposed; the volume of an anterior tooth (103) is detected, then the volume of an ideal tooth (104) is superimposed, and finally the volume of a respective tooth preparation (105) is further superimposed; the volume of two teeth (106, 107) with a gap of one tooth missing between them is detected, then the volumes of the respective ideal teeth (108, 109, 110) are superimposed, and finally the volumes of the respective tooth preparation (111, 112) for a bridge are further superimposed.

5. Process for diagnosing, planning, and guiding the execution of dental preparations in fixed prosthetics, according to one or more of previous claims, **characterized by** the fact that:
- in the above said *planning of ideal dental preparation(s),* the volume of a tooth (113) to be subjected to the volume reduction operation to obtain a dental preparation (114) is detected; the dental preparation (114) allows for obtaining a thickness (113) to be able to insert restorative material; the dental preparation (114) allows for obtaining a total occlusal convergence angle, between the axes (115, 116) identified by the lateral walls of the tooth with reduced volume, to be able to insert restorative material.

6. Process for diagnosing, planning, and guiding the execution of dental preparations in fixed prosthetics, according to one or more of previous claims, **characterized by** the fact that:
- in the above said *planning of ideal dental preparation(s),* the volume of a tooth (150) is detected through the use of image processing technologies; in the same tooth (150), the relationship between the crown (151) and root (153) is then identified to the support of a potential abutment; in a pair of teeth (150a, 150b), the distance (154) between the respective abutments for the installation of a bridge is identified; in the pair of teeth (150a, 150b), the divergence (156) between two axes (155a, 155b) of the respective abutments for the installation of a bridge is identified; in the tooth (150), a finish line (157) is identified;
- in the above said *diagnosis of the ideal dental preparation(s) generated,* a tooth (180) is detected, in which the internal components of enamel (181), cementum (182), dentin (183) and pulp (184) are highlighted; and then in the same tooth (180), the internal components of enamel (181), cementum (182), dentin (183), pulp (184) and restoration material (185) are highlighted.
- in the above said *diagnosis of the ideal dental preparation(s) generated,* a tooth (200) is detected and a volume reduction operation is performed, along with the inclination of the axes (201, 202) and wall (203), to obtain a dental preparation (204); in the same tooth (200) the internal components are highlighted, and the possible need for endodontic treatment is evaluated; in the treated teeth (210, 220) the adhesive retention is evaluated, that is the choice of the appropriate cementation procedure, and the composite (211), dentine (212, 221) and enamel (213, 222) parts are indicated; in the respective treated teeth (230a, 230b, 230c) their mechanical stability is evaluated; in further treated teeth (257, 258) their parallelism is evaluated in order to define favourable axes (251, 252) and (253, 254) for the insertion of multiple abutments.

7. Process for diagnosing, planning, and guiding the execution of dental preparations in fixed prosthetics, according to one or more of previous claims, **characterized by** the fact that:
- in the above said *transfer the ideal dental preparation into the oral cavity of a real patient*, according to the option with dedicated template and drills, a template (300) is applied to a tooth (301), in which the same template (300) represents a guide for the volume reduction operation, the inclination of axes and wall, in order to obtain a dental preparation; subsequently, the tip (352) of a drill (350) is applied for the above said volume reduction operation.

8. Process for diagnosing, planning and guiding the execution of dental preparations in fixed prosthetics, according to one or more of previous claims, **characterised by** the fact that:
- in the above said *transfer the ideal dental preparation into the oral cavity of a real patient*, according to the option of real-time control by stereophotogrammetry, the tip (352) of a drill (350) is applied to a tooth (301) for a volume reduction operation, axis and wall inclination, in order to obtain the dental preparation, using a real-time control system (400) by stereophotogrammetry, in the situation in which the adjacent teeth (360, 362) must not be treated; as the operator approaches the boundary of the volume of freedom (355), the handpiece of the above said drill will begin to reduce the rotation speed of the drill until it even stops, and at the same time there may also be acoustic and sensorial feedback, that is vibration of the same handpiece, to guide the operator.

9. Computer system, comprising hardware, software, and peripherals, that implements a process for diagnosing, planning, and guided execution of dental preparations, according to one or more of previous claims, said computer system comprising:
- means for acquiring data relating to patient's anatomical structures and additional data from intraoral scanning devices, so as to obtain a three-dimensional model of the patient's anatomical and surface structural information;
- a memory in which said three-dimensional model of the patient's anatomical and surface structural information is stored;
- a user interface that allows for the implementation of diagnostic, planning, and guided execution of dental preparations via external devices;
- means for processing, managing, and integrating data, capable of performing real-time control actions directed to said external devices and interacting in real time with the actions of an operator;
- means of transmitting data relating to real-time control actions directed towards the above said external devices, consisting in particular of cutters with guidance actions and acoustic and sensory feedback.

10. Computer system, comprising hardware, software, and peripherals, according to previous claim 9, said computer system **characterized in that**:
- in the means for acquiring data relating to patient's anatomical structures, the above said data are in DICOM (Digital Imaging and Communication in Medicine) format and come from computed tomography devices using CBCT (Cone Beam Computed Tomography) technology; through the above said acquisition means, additional data are acquired in STL (Standard Tessellation Language) format, coming from standard intraoral scanning devices, so as to obtain a three-dimensional model of both anatomical and surface structural information.
